# EUROPÄISCHE PATENTSCHRIFT

(11) **EP 1 910 029 B1**
(45) Veröffentlichungstag und Bekanntmachung des Hinweises auf die Patenterteilung: **15.09.2010**
(21) Anmeldenummer: 06761804.1
(22) Anmeldetag: 17.07.2006
(51) Int. Cl.: B25B 5/06, B23Q 1/00

(54) **SPANNVORRICHTUNG**
TENSIONING DEVICE
DISPOSITIF DE SERRAGE

(30) Priorität: 18.07.2005 DE 102005033468
(43) Veröffentlichungstag der Anmeldung: 16.04.2008
(73) Patentinhaber: Hofmann, Klaus, 85567 Bruck (DE)
(72) Erfinder: Hofmann, Klaus, 85567 Bruck (DE)
(74) Vertreter: Mischung, Ralf
(86) Internationale Anmeldenummer: PCT/DE2006/001226
(87) Internationale Veröffentlichungsnummer: WO 2007/009439

(56) Entgegenhaltungen:
- WO-A1-01/34990
- DE-A1- 10 117 485
- DE-U1- 20 022 353

## Beschreibung

Die vorliegende Erfindung betrifft eine Spannvorrichtung, insbesondere für Werkzeugmaschinen, nach dem Oberbegriff des Anspruchs 1 , die aus dem Dokument WO 01/34990 bekannt ist. In Werkzeugmaschinen der nach dem Stand der Technik bekannten Art werden Werkstücke bearbeitet, die dazu in unterschiedlicher Weise befestigt werden können. Bekannt sind dazu insbesondere solche Vorrichtungen, bei denen das Werkstück über Spannzangen gegen ein Maschinenbett verschraubt wird und durch entsprechendes Lösen der Verschraubung wieder freigegeben wird. Darüber hinaus sind Spannvorrichtungen bekannt, die an den Arbeitstisch der Maschine geschraubt werden und spezifisch für ein bestimmtes Werkstück ausgebildet bzw. angeordnet sind. Beim Wechsel des Werkstücks bzw. des Werkstücktyps muss die Spannvorrichtung jedesmal neu ab- und aufgebaut und der Nullpunkt neu ermittelt werden

Weiterhin ist das Bedürfnis bekannt, mehrere Werkstücke idealerweise gleichzeitig im Bearbeitungsbereich einer Werkzeugmaschine anzuordnen und zu fixieren bzw. von dort zu entnehmen. Dazu können die Werkstücke gemeinsam auf einem Träger, einer Art Palette oder ähnlichem fixiert angeordnet werden, um anschließend den Träger als Ganzes im Bearbeitungsbereich der Werkzeugmaschinen zu fixieren. Nach erfolgter Bearbeitung wird der Träger als Ganzes wieder aus der Fixierung gelöst und entnommen.

Allgemein bekannt sind solche Spannvorrichtungen, bei denen ein Fixierelement, welches mittelbar oder unmittelbar als Träger eines zu bearbeitenden Werkstücks verwendet wird, rastbar in einer Aufnehmung eingesetzt wird. Das Verrasten bzw. Lösen kommt dabei der Fixierung bzw. Freigabe des Fixierelements gleich. Diese Spannvorrichtungen sind jedoch im Aufbau kompliziert und in der Bedienung umständlich.

Aus der DE 101 174 85 A1 ist eine Spanneinrichtung zur Fixierung eines Bauteils in einer Aufnahme bekannt. Über einen mit einem Druckmedium beaufschlagbaren Druckraum werden dabei Klemmelemente in radialer Richtung auf einen Fußabschnitt des Bauteils geschoben, um dieses zu Fixieren. Derartige Spanneinrichtungen sind wegen ineffizienter Kraftausbeute und erforderlichen Abdichtungen umständlich und teuer.

De WO 01/34990 A1 beschreibt ein Prinzip zur Klemmung bewegter Komponenten mithilfe druckbeaufschlagbarer Kammern, die sich unter Druck verformen und dadurch Klemmkräfte erzeugen oder aufheben. Eine Fixierung von Bauteilen oder deren Halterung in einer dafür vorgesehenen Aufnahme beschreibt diese Schrift nicht.

Aufgabe der Erfindung ist es daher, eine Spannvorrichtung, insbesondere für Werkzeugmaschinen, anzubieten, welche im Aufbau einfach gestaltet und einfach zu bedienen ist.

Die Aufgabe wird gelöst durch eine Spannvorrichtung nach Anspruch 1.

Die Spannvorrichtung ist gekennzeichnet durch den Einsatz eines besonderen Spannelements, welches ein Fixierelement in einer Aufnahme bzw. einem Sitz klemmen bzw. daraus freigeben kann. Als besonders vorteilhaft ergibt sich dabei, dass durch relativ geringe Betätigungskräfte im Spannelement sehr hohe Klemmkräfte aufgebracht werden können, um das Fixierelement sicher zu halten. Dafür benötigt das Spannelement vorteilhafterweise wenig Bauraum und ist sehr verschleißarm.

Eine einfachste Ausführungsform der Spannvorrichtung wird in einem Grundkörper angebracht, der beispielsweise fest mit dem Maschinenbett verschraubt ist. Der Grundkörper weist eine Aufnahme zum Einsetzen bzw. Herausnehmen eines Fixierelements auf. Das Fixierelement seinerseits trägt dabei das Werkstück oder einen entsprechenden Träger, der seinerseits mit den zu bearbeitenden Werkstücken bestückt ist.

Die Spannvorrichtung umfasst zum lösbaren Fixieren des Fixierelements wenigstens ein im Weiteren näher zu beschreibendes Spannelement und wenigstens ein durch das Spannelement mit einer Klemmkraft beaufschlagbares Klemmteil. Das Klemmteil ist erfindungsgemäß so angeordnet, dass es durch die Klemmkraft in einer Bewegung B zur Klemmung oder Freigabe des Fixierelements in der Aufnahme bewegbar ist.

Das Spannelement umfasst wenigstens eine mit Über- oder Unterdruck beaufschlagbare und verformbare Kammer. Diese Kammer ist zumindest teilweise von wenigstens einer zug- und/oder druckfesten Wandung begrenzt. Die Kammer bzw. die Wandungen sind dabei so ausgestaltet, dass eine Druckbeaufschlagung der Kammer diese verformt und durch die Verformung Zug- oder Druckkräfte innerhalb der Wandung und insbesondere in ihrer Längsrichtung auftreten. Die solchermaßen im Wesentlichen in Längsrichtung der Kammerwandung auftretenden Kräfte werden an geeigneter Stelle (vorzugsweise am Rand der Wandungen) als eine Verformungskraft abgegriffen und in das Klemmteil unmittelbar oder mittelbar übertragen, so dass dieses seinerseits das Fixierelement in der Aufnahme fixiert bzw. freigibt.

Wie anhand der Figurenbeschreibung zu sehen sein wird, lässt sich durch ein solchermaßen ausgebildetes Spannelement mit relativ geringen fluiddynamischen Drücken in der Kammer eine sehr hohe Verformungskraft in den Kammerwandungen erzeugen bzw. an den in deren Längsrichtung die Wandungen begrenzenden Rändern abgreifen. Dadurch kann die Spannvorrichtung insgesamt relativ klein gebaut werden und trotzdem für einen sicheren Halt des Fixierelements in der Aufnahme sorgen. Als weiterer Vorteil gegenüber dem Stand der Technik sei zu erwähnen, dass das Spannelement für die Druckbeaufschlagung seiner Kammer mit einem im Wesentlichen beliebigen Fluid, insbesondere also mit Luft betätigt werden kann. Druckluft ist üblicherweise in der Nähe der vorgenannten Werkzeugmaschine bzw. Bearbeitungszentren verfügbar, ist umweltfreundlich und preiswert.

Auch die Anzahl der einzelnen Bauelemente der Spannvorrichtung ist relativ gering, was insgesamt eine technisch elegante und preisgünstige Alternative zu den bekannten Spannvorrichtungen nach dem Stand der Technik darstellt.

Eine vorteilhafte Ausführungsform der Erfindung sieht vor, dass die die Verformungskraft erzeugende Verformung der Kammer des Spannelements im Wesentlichen senkrecht zur Verformungskraft gerichtet ist. Dieser Effekt tritt insbesondere bei solchen Kammern auf, bei denen eine innere Abmessung erheblich kleiner ist als die Abmessungen in die beiden dazu senkrechten Richtungen. Bei Druckbeaufschlagung einer solchen Kammer (im Folgenden sei unter Druckbeaufschlagung stets auch eine "Beaufschlagung" mit Unterdruck gegenüber der Umgebung gemeint, bei der also ein Überdruck außerhalb der Kammer vorliegt) werden die in dem kurzen Abstand gegenüber liegenden Wandungsbereiche auseinander (oder bei Unterdruck auch aufeinander zu) gedrückt. Das sich ergebende Ausbauchen der Kammer führt über die zug- oder druckfesten Wandungen zu einer Verkürzung der Kammerabmessung in wenigstens einer der beiden längeren Richtungen. Wird diese Verkürzung (oder bei umgekehrter Druckbeaufschlagung Längung) behindert, so tritt eine dieser Längenveränderung entgegengesetzte Verformungskraft auf. Die Verformungskraft soll direkt oder gegebenenfalls übersetzt als Klemmkraft auf das Fixierelement einwirken, um es in der Aufnahme festzuhalten oder umgekehrt freizugeben.

Die Verformungskraft entsteht zu ihrem weit überwiegenden Anteil durch die Umwandlung von fluiddynamischen Druckkräften innerhalb der Kammer in solche Kräfte, die längs der (idealerweise gegenüber liegenden) Wandungen verlaufen und an deren Ende als Zug- oder Druckkräfte abgegriffen werden können. Zwar erfährt bei einer Druckbeaufschlagung auch der kurze Wandungsabschnitt, der die beiden eng beieinander liegenden Wandungen verbindet, eine entsprechende Druckkraft, die Kammer soll jedoch so ausgestaltet sein, dass dieser Anteil nicht wesentlich zur resultierenden Verformungskraft beiträgt.

Idealerweise besteht die Kammer also im Wesentlichen aus zwei gegenüber liegenden, eng beabstandeten Wandungen. Denkbar ist selbstverständlich die Anordnung mehrerer solcher Kammern im Sinne eines Kammernpakets, bei denen die Wandungen weitgehend parallel liegen und in ihren Endbereichen so zusammengefasst werden, dass dort die Verformungskraft insgesamt bzw. gemeinsam abgegriffen werden kann.

Eine weitere Ausführungsform der Erfindung sieht vor, dass wenigstens eine Wandung im Zustand ohne Druckbeaufschlagung konvex oder konkav relativ zum Inneren der Kammer ausgebildet ist. Derartige vorgeformte Kammern weisen auch im drucklosen Zustand eine gewisse Grundstabilität auf, und geben über das Ausmaß der Wölbung das Maß der Längenänderung vor, welches sich bei Abplattung der Wandungen durch Druckbeaufschlagung maximal ergibt. Je nach Krümmung und Flexibilität solcher Wandungen lassen sich die Längenänderung der Kammer relativ genau vorgeben.

Es ist offensichtlich, dass für den vorbeschriebenen Zweck die Wandungen der Kammer zwar flexibel, in ihrer Längsrichtung jedoch zug- und/oder druckfest ausgebildet sein müssen, um die in ihrer Längsrichtung auftretenden Kräfte möglichst unverändert an den Rand weiterzuleiten. Denkbar sind insbesondere Ausführungen in Form von Metallschalen oder mehreren übereinander liegenden dünnen Metallschichten. Auch ein stabil gewebtes, vorzugsweise metallisches Netz, welches von einem flexiblen, aber dichten Medium umgeben ist (beispielsweise eine Art Gummimatte mit darin eingebettetem Stahlgeflecht) kann den vorbeschriebenen Zweck erfüllen. Selbstverständlich ist auch jedes andere Material, welches einerseits die Flexibilität, andererseits aber die nötige Steifigkeit und insbesondere Zug- und Druckfestigkeit besitzt, verwendbar.

Die über das Spannelement erzeugte Verformungskraft soll erfindungsgemäß als Klemmkraft auf das Fixierelement einwirken. Die Verformungskraft wird dabei an geeigneter Stelle, insbesonder am Rand der beieinander liegenden Kammerwandungen, abgegriffen und auf das Klemmelement übertragen. Dieses führt die vorbeschriebene Bewegung B aufgrund der Längenänderung der Kammer nach, und erlaubt dadurch dessen Verschiebung in Richtung auf das Fixierelement zu bzw. davon weg.

Die auftretenden Kräfte können im wesentlichen zweierlei Gestalt haben. Zum einen kann die Verformung der Kammer selbst unmittelbar dazu verwendet werden, die aus der Verformung resultierende Längenänderung in einen Kraft zu wandeln, die bei Rückverformung der Kammer wieder verschwindet. Umgekehrt kann die Kammer durch Verformung auch quasi in sich vorgespannt werden, da die Kammerwandungen bei ausreichender Steifigkeit ihre Rückverformung in die Ausgangslage erstreben. Nimmt man den Druck auf die Kammer wieder weg, zwingen die Rückstellkräfte die Kammer wieder in ihre ursprüngliche Form, wobei aus der Rückverformung eine Klemmkraft resultiert. Letzte Variante hat den Vorteil, dass zur Klemmung an sich mangels Beaufschlagung der Kammer auch kein Druckmedium (insbesonder Luft, Hydrauliköl etc.) benötigt wird. Dies erhöht die Sicherheit des Systems.

In einem einfachsten Fall wird die durch das Spannelement erzeugte Verformungskraft in gleicher Höhe und gleicher Richtung in das Klemmelement eingeleitet und entspricht damit der Klemmkraft, was einen besonders einfachen Aufbau gewährleistet. Denkbar ist jedoch auch, die Verformungskraft in die Klemmkraft zu über- oder untersetzen oder auch in der Richtung zu verändern. So kann die Verformungskraft z.B. über eine Hebelkonstruktion umgelenkt und/oder so in eine Klemmkraft gewandelt werden, dass die beiden Kräfte einen Winkel von 90° (oder jeden anderen gewünschten Winkel) einschließen. Dies ermöglicht die im Wesentlichen flexible Anordnung des Spannelements relativ zum Fixierelement.

In einer vorteilhaften Ausführungsform der Erfindung weist das Klemmteil eine schräg zur Klemmkraft verlaufende Keilfläche auf, die bei der Bewegung B mit einer Fläche des Fixierelements zur Freigabe oder Fixierung des Fixierelements zusammenwirkt. Bewegt sich also das Klemmteil beispielsweise in Richtung auf das Fixierelement zu um es zu klemmen, so wirkt eine am Klemmteil vorgesehene schräge Keilfläche mit einer entsprechenden Fläche des Fixierelements so zusammen, dass bei weiterem Vorrücken des Klemmteils die Keilflächen eine Bewegungskomponente senkrecht zur Klemmkraft übertragen und so das Fixierelement um ein Maß entlang seiner Längsachse zu bewegen, insbesondere also in einen Sitz oder gegen einen Anschlag zu drücken und fest zu klemmen. Bei der umgekehrten Bewegung, wenn das Klemmteil also von dem Fixierelement weg bewegt wird, erlauben die sich voneinander lösenden Keilflächen ein Loslösen des Fixierelements von seinem Klemmsitz oder Anschlag. Dies wird im Einzelnen in der Figurenbeschreibung zu sehen sein.

Eine besonders vorteilhafte Ausführungsform ist dadurch gekennzeichnet, dass das Fixierelement und/oder das Spannelement im Wesentlichen rotationssymmetrisch ausgebildet ist. Bei der rotationssymmetrischen Form des Spannelements kann dieses das Fixierelement im Wesentlichen umlaufen und so allseitig zum Zentrum hin eine entsprechende Verformungskraft bzw. Klemmkraft aufbringen. Das Spannelement kann dabei insbesondere aus zwei einander gegenüber liegenden Scheibenringen ausgebildet sein, die die Kammer im Wesentlichen zwischen sich einschließen. Die einander gegenüber liegenden Ringabschnitte können dabei auch konvex bzw. konkav zueinander ausgebildet sein.

Ist auch das Fixierelement rotationssymmetrisch ausgebildet, so kann es entlang seiner Längsrichtung im Zentrum des ringförmigen Spannelements in einer Aufnahme eingesetzt werden, und dort im Prinzip unabhängig von seiner Drehposition festgeklemmt werden. Denkbar ist natürlich auch eine andere Form des Fixierelements, und auch das Spannelement muss das Fixierelement nicht ringförmig umschließen. Auch eine Anordnung eines Spannelements auf nur einer Seite des Fixierelements ist denkbar, um das Fixierelement durch die Längenänderung der Kammer bzw. die daraus resultierende Verformungskraft oder Klemmkraft zu klemmen oder zu lösen.

Werden bei ringförmig ausgebildetem Spannelement die einander gegenüber liegenden Kammerwandungen an dem äußeren Durchmesser räumlich fixiert (beispielsweise an dem Grundkörper), so erfolgt die Längenänderung ausschließlich zum Zentrum des Ringes hin, wodurch die Klemmbewegung bzw. Klemmkraft sehr effektiv und allseitig auf das im Zentrum angeordnete Fixierelement einwirken kann.

Damit ein im Zentrum der Spannvorrichtung zu fixierendes Fixierelement erfolgreich geklemmt werden kann, bietet es sich an, das um das Fixierelement angeordnete Klemmteil als umlaufenden, geschlitzten Klemmring auszubilden. Dann kann der Klemmring den allseitig von außen nach innen wirkenden Klemmkräften unter einer radialen Verformung nachgeben, wobei sich der Schlitz des Klemmrings verengt. Ein solcher umlaufender Ring erzeugt besonders homogene Klemmkräfte rund um das Fixierelement, mit Ausnahme des geschlitzten Bereiches.

Selbstverständlich ist auch die Verwendung einzelner Klemmbacken denkbar, die miteinander nicht verbunden sein müssen, und auch in gerader, also nicht gekrümmter Form mit einem dazu komplementär ausgebildeten Fixierelement zusammenwirkt.

Eine weitere Ausführungsform der Erfindung sieht vor, dass das Klemmteil gegen oder in Richtung der Klemmkraft vorgespannt ist. Dadurch wird eine Öffnungs- oder Schließbewegung des Klemmteils relativ zum Fixierelement unterstützt. So kann beispielsweise bei einem zentrisch angeordneten Fixierelement, welches von einem ringförmigen Spannelement umgeben ist, das Klemmteil eine Vorspannung gegen die nach innen gerichtete Klemmkraft aufweisen. Wenn dabei der drucklose Zustand der Kammer dem ungeklemmten Zustand des Klemmteils entspricht, so unterstützt der vorgespannte Klemmring vorteilhaft die Öffnungsbewegung. Umgekehrt ist selbstverständlich denkbar, den Klemmring mit einer nach innen gerichteten Vorspannung zu versehen, um grundsätzlich den Klemmzustand beizubehalten und nur durch entgegengesetzt wirkende Verformungskraft des Spannelements aus dieser Klemmhaltung aufgeweitet zu werden.

Erfindungsgemäß ist vorgesehen, die das Fixierelement aufnehmende Aufnahme mit einem Zentrierkonus auszustatten, der bei klemmender Kraftbeaufschlagung des Fixierelements mit diesem Fixierelement zusammenwirkt. Der Konus soll dabei das Fixierelement quer zu seiner Längsachse ausrichten, während es durch das Spannelement in den Klemmsitz oder gegen einen Anschlag gedrückt bzw. gezogen wird. Dadurch ist grundsätzlich möglich, ein mit gewissem Spiel einzusetzendes Fixierelement gezielt auszurichten und dort zu fixieren.

Für einen Lageausgleich um ein vorgebbares Toleranzmaß ist der Zentrierkonus schwimmend oder federnd gelagert. Dabei soll eine Ausrichtung des Fixierelements quer zu seiner Längsachse in einem tolerierbaren Maß zugelassen werden, während das Fixierelement geklemmt wird. Dadurch werden Längenänderungen, insbesondere infolge von Temperaturschwankungen, ausgeglichen. Dies ist insbesondere dann von Bedeutung, wenn innerhalb einer Werkzeugmaschine mehrere Spannvorrichtungen vorgesehen sind, die ihrerseits jeweils ein Fixierelement aufnehmen, wobei die Fixierelemente gemeinsam einen Träger aufnehmen und dadurch miteinander verbunden sind. Um den dadurch festgelegten Abstand der Fixierelement zueinander einerseits bzw. der Spannvorrichtungen zueinander andererseits mit gewissen Toleranzen zuzulassen, ist der vorgenannte Zentrierkonus schwimmend oder federnd gelagert vorgesehen. Er kann dabei beispielsweise in ein flexibles, in die Aufnahme eingebettetes Medium eingebracht sein.

Dies kann insbesondere ein das Fixierelement umlaufender Dichtungsring sein, in den der Zentrierkonus einvulkanisiert wurde, und der mit diesem zusammen in die Aufnahme eingesetzt wird. Der Zentrierkonus ist dann durch den Dichtungsring gehalten, aber quer zur Längsachse des Fixierelements hoch leicht verschieblich.

Alternativ kann die schwimmende Lagerung auch durch ein im Wesentliches freies Ende eines hülsenförmigen Ansatzes ausgebildet sein, dessen gegenüber liegendes festes Ende an der Aufnahme oder den Grundkörper angeformt oder daran befestigt ist. In diesem Fall ist die Materialbeschaffenheit bzw. Steifigkeit des Zentrierkonus maßgebend für seine Beweglichkeit quer zur Längsachse des Fixierelements.

Als Zentrierhilfe für ein mit dem Fixierelement in die Aufnahme einzusetzendes Werkstück können gemäß einer weiteren vorteilhaften Ausführungsform der Erfindung wenigstens drei über den Umfang um die Längsachse ausgerichtete, in radialer Richtung verlaufende Längsnuten in dem Grundkörper vorgesehen sein. Diese wirken erfindungsgemäß mit Stiften zusammen, die von dem zu fixierenden Werkstück oder einer dieses tragenden Halterung beim Einsetzen in die Nuten ragen und das Werkstück dadurch eindeutig zentrieren.

Weitere vorteilhafte Ausführungsformen ergeben sich aus den Unteransprüchen.

Zwei Beispiele einer Ausführungsform der vorgenannten Erfindung sollen nachfolgend anhand eines Figurenbeispiels erläutert werden. Von den Figuren zeigt
- Fig. 1: eine schematische Seitenansicht einer ersten Ausführungsform der erfindungsgemäßen Spannvorrichtung im klemmenden Zustand;
- Fig. 2: eine schematische Detailansicht gemäß Fig. 1;
- Fig. 3: eine schematische Schnittansicht der Spannvorrichtung gemäß Fig. 1 im freigegebenen Zustand;
- Fig. 4: eine schematische Seitenansicht einer zweiten Ausführungsform der erfindungsgemäßen Spannvorrichtung;
- Fig. 5: eine schematische Seitenansicht zweier in ein Maschinenbett einge- setzten Spannvorrichtungen mit darüber angeordnetem Werkstückträ- ger,
- Fig. 6: eine Anordnung von vier in einem Maschinenbett vorgesehenen Spannvorrichtungen,
- Fig. 7: einen mit einem Fixierelement verbundenen Werkstückträger mit Werkstück, und
- Fig. 8: eine Draufsicht auf eine Anordnung gemäß Fig. 6.

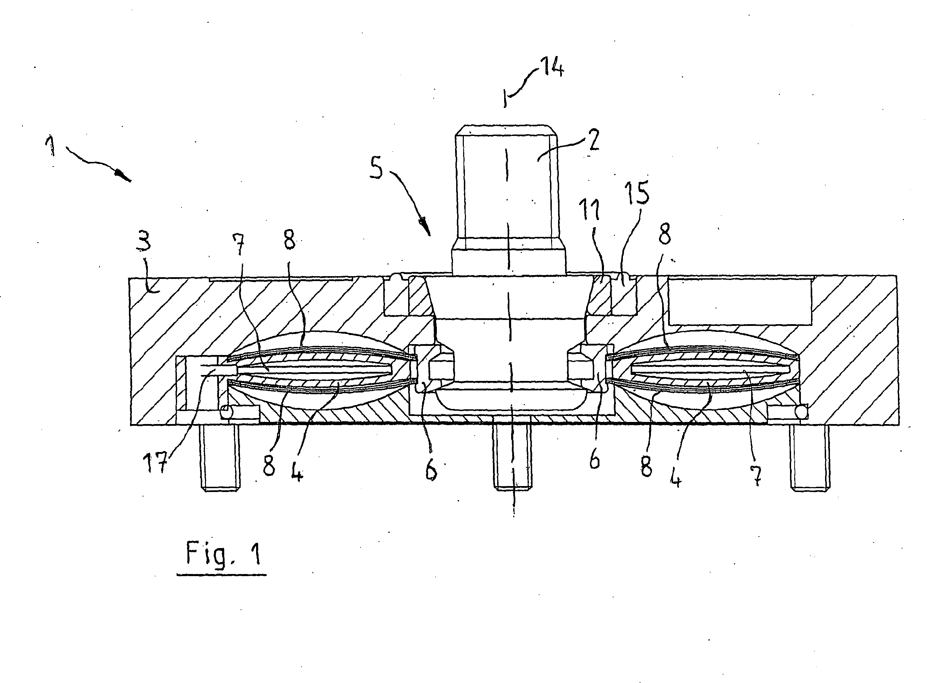

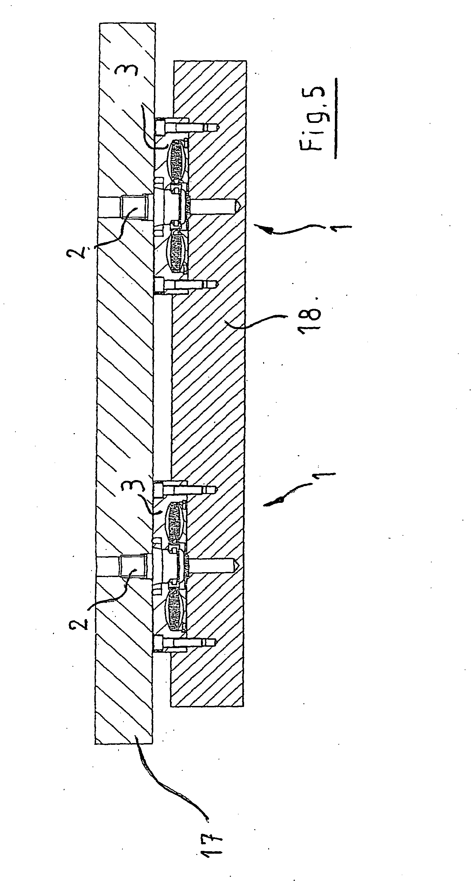

In Fig. 1 ist eine Ausführungsform der erfindungsgemäßen Spannvorrichtung dargestellt. In einem Grundkörper 3 ist ein Fixierelement 2 lösbar eingesetzt (das Fixierelement 2 soll einen in Fig. 5 schematisch angedeuteten Werkstückträger 17 tragen). Dazu weist der Grundkörper 3 eine in etwa topfartige Aufnahme 5 auf, in die das Fixierelement 2 einsetzbar ist. Das Fixierelement 2 ist rotationssymmetrisch um seine Längsachse 14 ausgebildet.

Im eingesetzten Zustand des Fixierelements wird dieses von einem im Grundkörper 3 angeordneten Spannelement 4 allseitig umlaufen und liegt in dessen Mitte. Das Spannelement 4 wird im Wesentlichen aus zwei einander gegenüber liegenden, im Querschnitt leicht gebogenen ringförmigen Wandungen 8 gebildet, die hauptsächlich aufgrund ihrer zueinander konvexen Ausrichtung eine Kammer 7 einschließen. Die Wandungen 8 sind aus einem biegsamen aber zug- und druckfestem Material gefertigt.

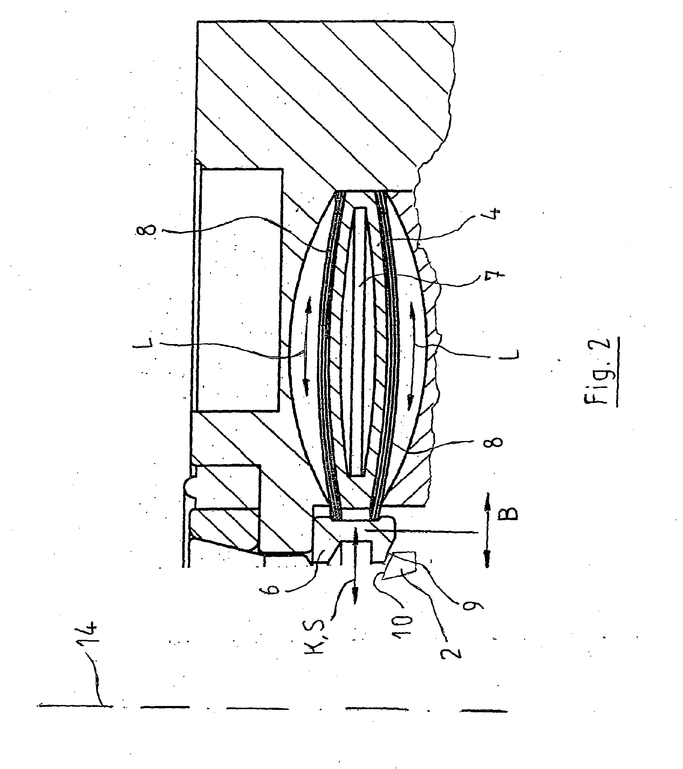

An dem äußeren umlaufenden Rand des Spannelements 4 ist dieses durch die Aufnahme in den Grundkörper 3 in radialer Richtung fixiert. An den nach innen gewandten Rändern des Spannelements 4 schließt sich ein Klemmteil 6 an, welches mit den Wandungen 8 so verbunden ist, dass eine Verformung der Kammer 7 bzw. der Wandungen 8 in radialer Richtung nach innen auf das Klemmteil 6 in gleicher Richtung einwirkt. Das Klemmteil 6 wird in diesem Fall nach innen in Richtung auf das Fixierelement 2 so zu bewegt, dass dieses - wie in Fig. 2 im Detail gezeigt - fixiert wird.

In Fig. 2 ist in vergrößerter schematischer Teilansicht der rechts von der Längsachse 14 liegende Teil des Spannelements 4 dargestellt. Zu erkennen ist wieder die Kammer 7, die von den Wandungen 8 eingeschlossen wird, wobei die Wandungen 8 sich im Wesentlichen in einer Längsrichtung L erstrecken.

Eine Beaufschlagung der Kammer 7 mit einem Unterdruck führt dazu, dass sich die beiden gegenüber liegenden Wandungen 8 insbesondere im Zentrum der Kammer aufeinander zu bewegen. Dadurch erfahren die Wandungen 8 in in Fig. 2 dargestellter horizontaler Richtung eine Längung, die sich in Form einer Verformungskraft S in radialer Richtung nach innen unmittelbar auf das Klemmteil 6 überträgt und dieses entlang einer Bewegung B nach innen zu verschieben trachtet. Verformungskraft S und Klemmkraft K sind in diesem Fall identisch.

Im umgekehrten Falle, bei einer Druckbeaufschlagung der Kammer 7 mit Überdruck, erfahren die Wandungen 8 in horizontaler Richtung eine Kürzung, der das Klemmteil 6 in umgekehrter Richtung der Bewegung B, also nach außen gerichtet, folgt. Dabei kann das Klemmteil 6 aufgrund einer inneren Vorspannung dieser Bewegung nach außen aus eigenem Antrieb folgen oder bei geeigneter Verbindung der Wandungen 8 mit dem Klemmteil 6 auch von den Wandungen 8 bzw. der resultierenden Verformungskraft S nach außen gezogen werden.

In Fig. 2 ist weiterhin ein kleiner Teil des Fixierelements 2 dargestellt, welcher eine relativ zur Bewegung B schräge Fläche 10 aufweist. Diese Fläche 10 wirkt bei der Bewegung B mit einer an der Unterseite des Klemmteils 6 vorgesehenen Keilfläche 9 dergestalt zusammen, dass bei Bewegung des Klemmrings 6 in radialer Richtung nach innen das Fixierelement 2 über den Kontakt mit der Fläche 10 um ein Maß in Richtung seiner Längsachse 14 verschoben bzw. zumindest in diese Richtung gegen einen (nicht dargestellten) Anschlag festgeklemmt wird.

Wird das Klemmelement 6 dagegen um ein ausreichendes Maß in radialer Richtung nach außen geöffnet, so gibt das Klemmteil 6 den in Fig. 2 gezeigten Abschnitt des Fixierelements 2 in axialer Richtung so frei, dass das Fixierelement 2 vollständig nach oben aus der Aufnahme 5 entnommen werden kann.

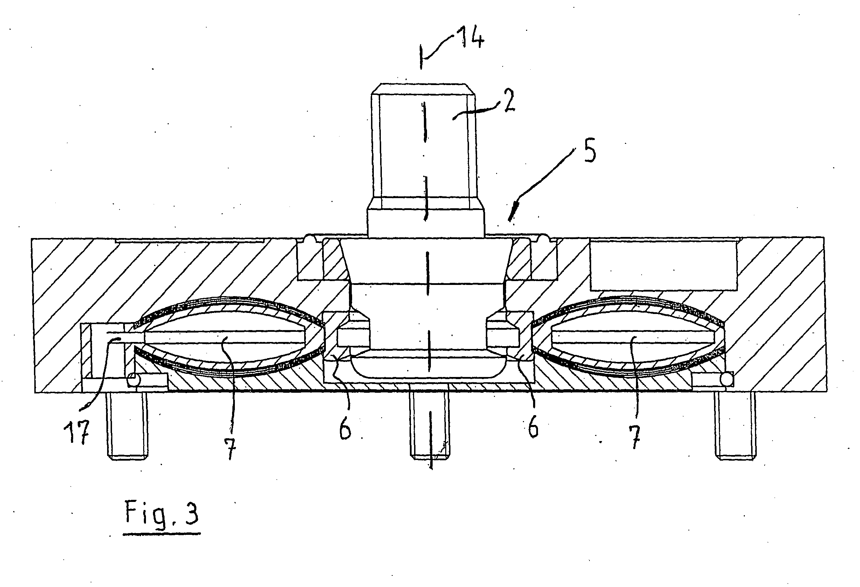

Während in Fig. 1 der geklemmte Zustand dargestellt ist, bei dem das Klemmteil 6 einen Teil des Fixierelements 2 in der Aufnahme 5 hintergreift und somit fixiert, zeigt die Fig. 3 den freigegebenen Zustand, bei dem das Klemmteil 6 soweit in radialer Richtung nach außen aufgeweitet ist, dass das Fixierelement 2 in Richtung seiner Längsachse 14 nach oben aus der Aufnahme 5 herausnehmbar ist. Nur der Vollständigkeit halber ist in Fig. 3 noch die Kammer 7 bezeichnet.

In Fig. 1 und Fig. 3 ist weiterhin zu sehen, dass die Kammer 7 zur Druckbeaufschlagung im jeweils linken Bereich des Grundkörpers 3 eine Öffnung 17 für die Zufuhr eines Druckmediums besitzt.

In Fig. 1 ist weiterhin zu sehen, dass das Fixierelement 2 in einem oberen Abschnitt durch einen Zentrierkonus 11 ausgerichtet wird. Der Zentrierkonus 11 ist über einen flexiblen Dichtungsring 15 in den Grundkörper 3 so schwimmend eingebettet, dass ein gewisser radialer Versatz des Fixierelements 2 relativ zu seiner Längsachse 14 vor oder während der Klemmung möglich ist.

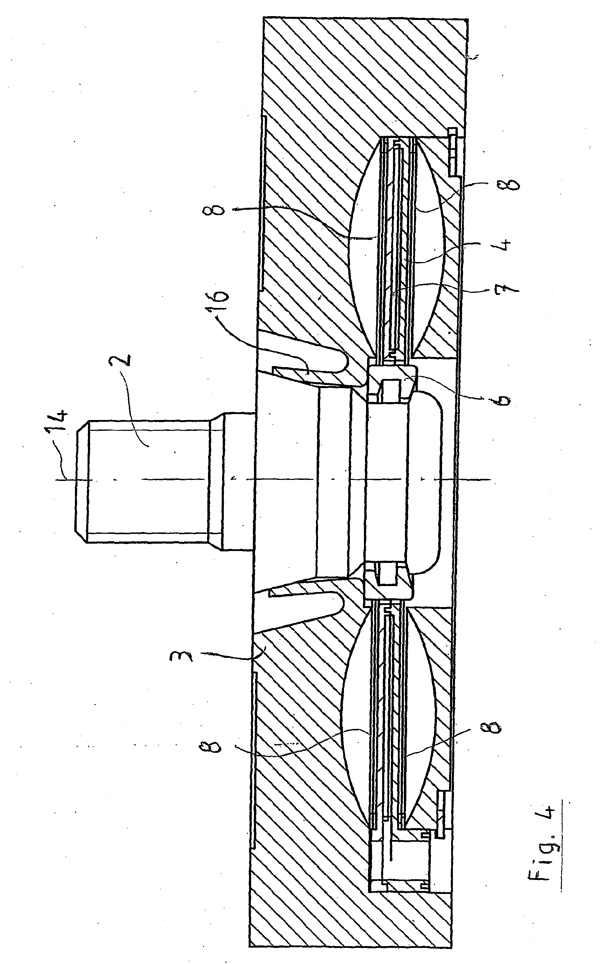

In Fig. 4 ist eine andere Ausführungsform der Spannvorrichtung dargestellt. Zu erkennen ist hier, dass das Spannelement 4 Wandungen 8 aufweist, die im Wesentlichen parallel zueinander liegen, wenn das Klemmteil 6 den geklemmten Zustand einnimmt. Durch Druckbeaufschlagung der Kammer 7 werden die Wandungen 8 auseinander gedrückt, was zu einer Kürzung der Wandungen 8 in horizontaler Richtung und zu einer entsprechenden Aufweitung des Klemmteils 6 führt, wodurch das Fixierelement 2 freigegeben wird.

In dem in Fig. 4 dargestellten, nicht innendruckbeaufschlagten Zustand des Spannelements 4 bewirkt dieses also eine Klemmung des Fixierelements 2. Dieser fixierende Zustand tritt also auch bei einem ungewollten Ausfall der Druckversorgung ein bzw. wird dann beibehalten, ohne dass sich das Fixierelement 2 unbeabsichtigt lösen kann.

Weiterhin ist in Fig. 4 eine andere Form des Zentrierkonus zu erkennen. Der Zentrierkonus ist hier als nach oben freies Ende eines hülsenförmigen Ansatzes 16 ausgebildet. Auch hier ergibt sich durch die vorgebbare Steifigkeit des Ansatzes 16 (abhängig von seinem Material und seiner Querschnittsform) eine Versatzmöglichkeit relativ zur Längsachse 14, um das Fixierelement 2 zumindest in vorgebbaren Toleranzen schwimmend aufzunehmen.

Der Vollständigkeit halber ist in Fig. 5 eine Anordnung von mehreren erfindungsgemäßen Spannvorrichtungen dargestellt. Dabei sitzen vier Spannvorrichtungen 1 in einem Maschinenbett 18 und dienen zur gemeinsamen Aufnahme eines palettenförmigen Trägers 17. Der Träger 17 wird dabei durch die Fixierelemente 2 gehalten, die durch jede Spannvorrichtung 1 aufgenommen werden. Weiterhin ist Fig. 5 auch zu entnehmen, dass der Anschlag für das Fixierelement 2, der in Richtung der nicht dargestellten Längsachsen bei der Klemmung verwendet wird, durch Auflage des Trägers 17 auf dem Grundkörper 3 jeder Spannvorrichtung 1 gebildet wird.

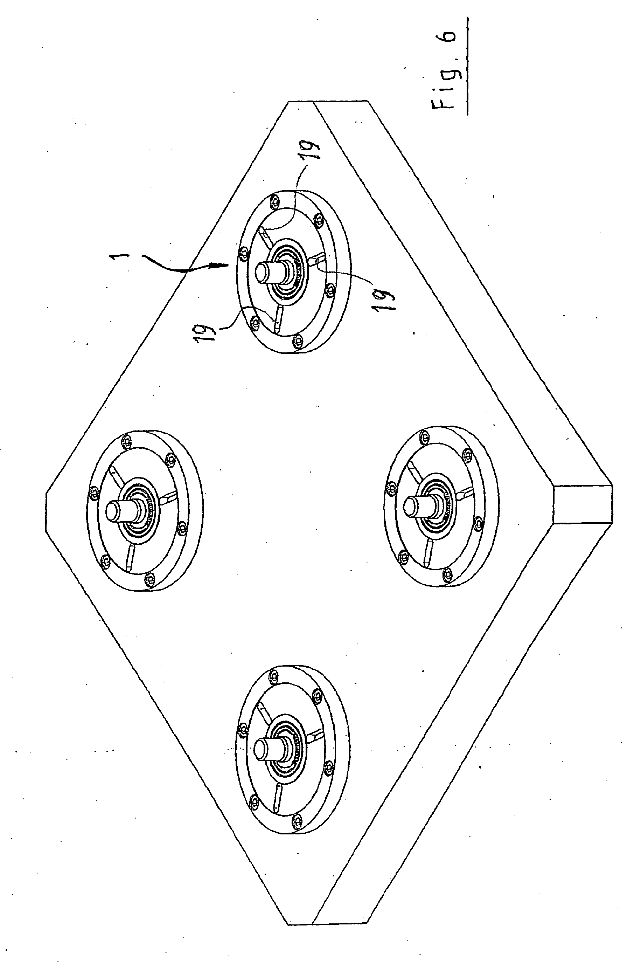

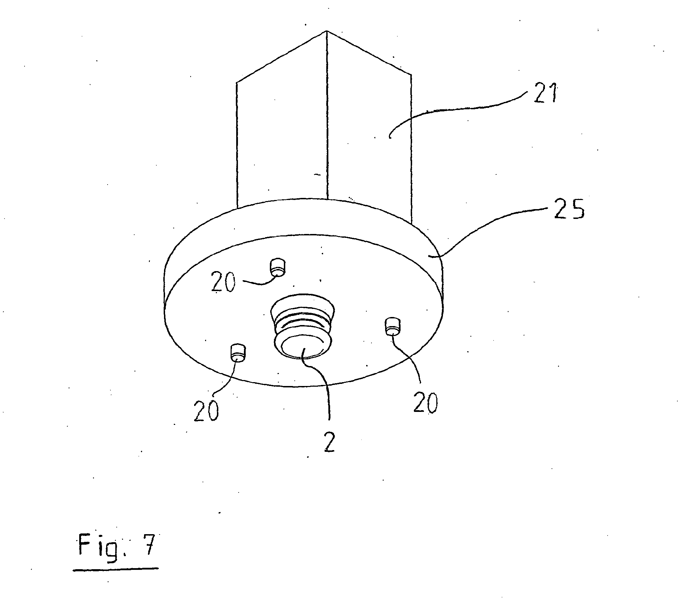

In Fig. 6 ist die Anordnung gemäß Fig. 5 in perspektivischer Darstellung ohne Träger gezeigt. Zu erkennen sind dort auch jeweils drei über den Umfang um die Längsachse 14 jeder Spannvorrichtung angeordnete Längsnuten 19. Diese wirken gemäß Fig. 7 mit Zapfen 20 zusammen. Die Zapfen 20 erstrecken sich von einem Träger 25, der ein Werkstück 21 trägt, in Richtung auf die Spannvorrichtung nach unten in die Nuten 19 und zentrieren damit den Träger 25 relativ zur Spannvorrichtung 1 bzw. der Aufnahme 5. Diese Zentrierung bietet sich insbesondere dort an, wo jede Spannvorrichtung ein "unabhängiges" Fixierelement aufnehmen soll, wo also nicht wie bei Träger 17 gemäß Fig 5. mehrere Fixierelemente an einem gemeinsamen Träger angeordnet sind.

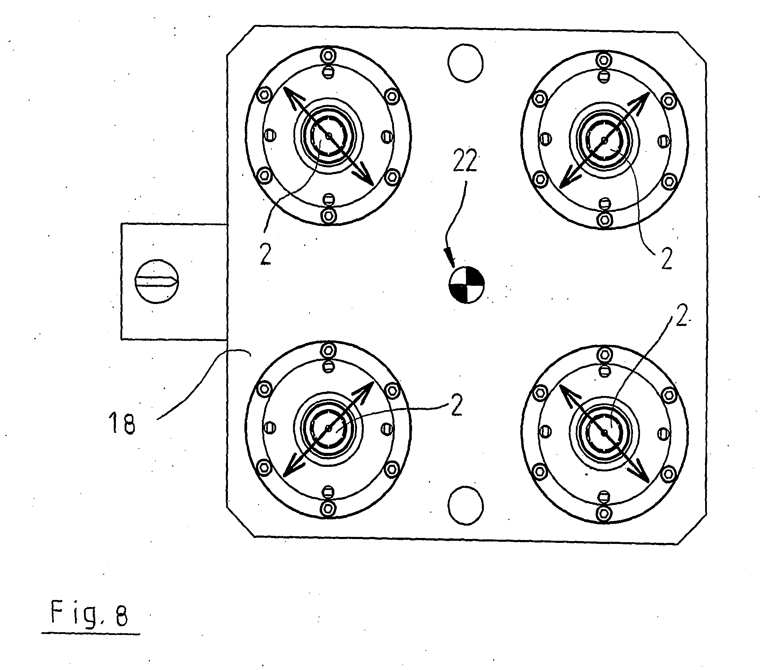

Fig. 8 zeigt 4 Fixierelemente 2 in einem Maschinenbett 18, die gemeinsam zur Aufnahme einer Trägerplatte vorgesehen sind. Jedes Fixierelement 2 ist dabei schwimmend gelagert, so dass dessen absolute Klemmposition im Maschinenbett 18 innerhalb vorgebbarer Toleranzen wählbar ist. Damit lassen sich (insbesondere gleichmäßige) Wärmedehnungen innerhalb des in das Maschinenbett 18 einzusetzenden Trägers ausgleichen, so dass das Trägerzentrum stets deckungsgleich über dem Zentrum 22 des Maschinenbetts liegt.

## Patentansprüche

1. Spannvorrichtung (1), insbesondere für Werkzeugmaschinen, mit einem in eine Aufnahme (5) einsetzbaren, eine Längsachse (14) aufweisenden Fixierelement (2), wobei das Fixierelement (2) als mittelbarer oder unmittelbarer Träger wenigstens eines zu bearbeitenden Werkstücks ausgebildet ist, und
a) mit wenigstens einem an einem Grundkörper (3) anzuordnenden Spannelement (4) zum lösbaren Fixieren des Fixierelements (2) in der Aufnahme (5), und
b) mit wenigstens einem durch das Spannelement (4) mit einer Klemm- oder Lösekraft (K) beaufschlagbaren Klemmteil (6),
c) wobei das Klemmteil (6) so angeordnet ist, dass es durch die Klemmkraft (K) in einer Bewegung (B) zur Klemmung oder Freigabe des Fixierelements (2) in der Aufnahme (5) bewegbar ist,
d) wobei das Spannelement (4) wenigstens eine mit Über- oder Unterdruck beaufschlagbare, verformbare Kammer (7) umfasst, die zumindest teilweise von wenigstens einer zug- und/oder druckfesten Wandung (8) so begrenzt ist, dass eine die Klemmkraft (K) erzeugende Verformungskraft (S) bei einer die Kammer (7) verformenden Druckbeaufschlagung im Wesentlichen resultiert aus den in Längsrichtung (L) der Wandung (8) verlaufenden, aus der Verformung der Kammer (7) resultierenden Zug- oder Druckkräften,
e) wobei die Kammer so ausgebildet ist, dass der Kammerquerschnitt bei einer Aufweitung der Kammer (7) in einer ersten Richtung eine Längenänderung in einer dazu senkrechten zweiten Richtung erfährt,
**dadurch gekennzeichnet,**
f) **dass** die Aufnahme (5) einen bei klemmender Kraftbeaufschlagung des Fixierelements (2) mit diesem zusammenwirkenden Zentrierkonus (11, 16) umfasst, wobei der Zentrierkonus (11, 16) für einen Lageausgleich um ein vorgebbares Toleranzmaß senkrecht zur Längsachse (14) schwimmend oder federnd gelagert ist

2. Spannvorrichtung nach Anspruch 1, **dadurch gekennzeichnet, dass** die Längenänderung eine Verkürzung ist.

3. Spannvorrichtung nach Anspruch 1 oder 2, **dadurch gekennzeichnet, dass** die die Verformungskraft (S) erzeugende Verformung der Kammer (7) im wesentlichen senkrecht zur Verformungskraft (S) gerichtet ist.

4. Spannvorrichtung nach einem der vorigen Ansprüche, **dadurch gekennzeichnet, dass** die die Kammer bildenden Wandungen zur Erzeugung einer mechanischen Über- oder Untersetzung von senkrecht auf die Wandungen wirkenden, fluiddynamischen Druckkräften in in Längsrichtung (L) der Wandungen verlaufende mechanische Zug- oder Druckkräfte ausgebildet sind.

5. Spannvorrichtung nach einem der vorigen Ansprüche, **dadurch gekennzeichnet, dass** die Kammer (7) im wesentlichen aus zwei gegenüberliegenden, eng beabstandeten Wandungen (8) gebildet ist.

6. Spannvorrichtung nach einem der vorigen Ansprüche, **dadurch gekennzeichnet, dass** wenigstens eine Wandung (8) im Zustand ohne Beaufschlagung mit Über- oder Unterdruck konvex oder konkav relativ zum Inneren der Kammer (7) ausgebildet ist.

7. Spannvorrichtung nach einem der vorigen Ansprüche, **dadurch gekennzeichnet, dass** das Klemmteil (6) eine schräg zur Klemmkraft (K) verlaufende Keilfläche (9) aufweist, die bei der Bewegung (B) mit einer Fläche (10) des Fixierelements (2) zur Freigabe oder Fixierung des Fixierelements (2) zusammenwirkt.

8. Spannvorrichtung nach einem der vorigen Ansprüche, **dadurch gekennzeichnet, dass** das Fixierelement (2) und/oder das Spannelement (4) im wesentlichen rotationssymmetrisch ausgebildet ist.

9. Spannvorrichtung nach Anspruch 8, **dadurch gekennzeichnet, dass** die Klemmkraft (K) in radialer Richtung nach innen gerichtet ist.

10. Spannvorrichtung nach einem der vorigen Ansprüche, **dadurch gekennzeichnet, dass** das Klemmteil (6) als das Fixierelement (2) umlaufender, geschlitzter Klemmring ausgebildet ist.

11. Spannvorrichtung nach einem der vorigen Ansprüche, **dadurch gekennzeichnet, dass** das Klemmteil (6) gegen oder in Richtung der Klemmkraft (K) vorgespannt ist.

12. Spannvorrichtung nach einem der vorigen Ansprüche, **dadurch gekennzeichnet, dass** der Zentrierkonus (11) für die schwimmende Lagerung in ein flexibles, in die Aufnahme (5) eingebettetes Medium (15) eingebracht ist.

13. Spannvorrichtung nach einem der vorigen Ansprüche, **dadurch gekennzeichnet, dass** der Zentrierkonus (11) für die schwimmende Lagerung als im wesentlichen freies Ende eines hülsenförmigen Ansatzes (16) ausgebildet ist, dessen gegenüberliegendes Ende an der Aufnahme (5) oder dem Grundkörper (3) angeformt oder befestigt ist.

14. Spannvorrichtung nach einem der vorigen Ansprüche, **dadurch gekennzeichnet, dass** der Grundkörper als Zentriermittel für ein mit dem Fixierelement (2) in die Aufnahme (5) einzusetzendes Werkstück wenigstens 3 über den Umfang um die Längsachse (14) ausgerichtete, in radialer Richtung verlaufende Längsnuten (19) aufweist.

## Claims

1. A tensioning device (1), in particular for machine tools, having a fixing element (2) that can be inserted into a receiver (5) and has a longitudinal axis (14), wherein the fixing element (2) is formed as an indirect or direct carrier of at least one workpiece that is to be processed, and
a) having at least one tensioning element (4) that is to be arranged on a basic body (3) for releasably fixing the fixing element (2) in the receiver (5), and
b) having at least one clamping portion (6) upon which the tensioning element (4) can act by means of a clamping or releasing force (K),
c) wherein the clamping portion (6) is arranged in such a way that it can be moved by the clamping force (K) in a movement (B) to clamp or free the fixing element (2) in the receiver (5),
d) wherein the tensioning element (4) comprises at least one deformable chamber (7) upon which excess or low pressure can act and which is delimited at least in part by at least one tension- and/or compression-resistant wall (8) in such a way that a deforming force (S), generating the clamping force (K), in the case of an application of pressure that deforms the chamber (7) substantially results from the tensile or compressive forces running in the longitudinal direction (L) of the wall (8) and resulting from the deformation of the chamber (7),
e) wherein the chamber is formed in such a way that the chamber cross-section in the case of a widening of the chamber (7) in a first direction undergoes a change in length in a second direction that is perpendicular thereto,
**characterised in that**
f) the receiver (5) comprises a centering cone (11, 16) which in the case of application of clamping force by the fixing element (2) cooperates with the latter, wherein the centering cone (11, 16) is mounted in a floating or resilient manner for compensation of the position by a predeterminable measure of tolerance perpendicularly to the longitudinal axis (14).

2. A tensioning device according to claim 1, **characterised in that** the change in length is a shortening.

3. A tensioning device according to claim 1 or 2, **characterised in that** the deformation of the chamber (7) that generates the deforming force (S) is directed substantially perpendicularly to the deforming force (S).

4. A tensioning device according to one of the previous claims, **characterised in that** the walls constituting the chamber are formed for the generation of a mechanical stepping up or down of fluid-dynamic compressive forces acting perpendicularly on the walls into mechanical tensile or compressive forces running in the longitudinal direction (L) of the walls.

5. A tensioning device according to one of the previous claims, **characterised in that** the chamber (7) is formed substantially from two opposing walls (8) that are closely spaced.

6. A tensioning device according to one of the previous claims, **characterised in that** at least one wall (8) in the state without application of excess or low pressure is formed so that it is convex or concave in relation to the interior of the chamber (7).

7. A tensioning device according to one of the previous claims, **characterised in that** the clamping portion (6) has a wedge surface (9) that extends obliquely to the clamping force (K) and cooperates in the case of the movement (B) with a surface (10) of the fixing element (2) in order to free or fix the fixing element (2).

8. A tensioning device according to one of the previous claims, **characterised in that** the fixing element (2) and/or the tensioning element (4) are/is formed in a substantially rotationally symmetrical manner.

9. A tensioning device according to claim 8, **characterised in that** the clamping force (K) is directed inwards in the radial direction.

10. A tensioning device according to one of the previous claims, **characterised in that** the clamping portion (6) is formed as a slit clamping ring that runs around the fixing element (2).

11. A tensioning device according to one of the previous claims, **characterised in that** the clamping portion (6) is pre-tensioned against or in the direction of the clamping force (K).

12. A tensioning device according to one of the previous claims, **characterised in that** the centering cone (11) for the floating mounting is introduced into a flexible medium (15) that is embedded in the receiver (5).

13. A tensioning device according to one of the previous claims, **characterised in that** the centering cone (11) for the floating mounting is formed as the substantially free end of a sleeve-shaped extension (16), whose opposite end is pre-formed on or secured to the receiver (5) or the basic body (3).

14. A tensioning device according to one of the previous claims, **characterised in that** the basic body has as centering means for a workpiece that is to be inserted into the receiver (5) with the fixing element (2) at least three longitudinal grooves (19) that are aligned over the periphery about the longitudinal axis (14) and extend in the radial direction.

## Revendications

1. Dispositif de serrage (1), en particulier pour des machines-outils, comportant un élément de fixation (2) pouvant être inséré dans un logement (5) et comportant un axe longitudinal (14), ledit élément de fixation (2) étant réalisé sous la forme d'un support indirect ou direct d'au moins une pièce à usiner, et
a) comportant au moins un élément de serrage (4) à agencer sur un corps de base (3) et destiné à la fixation amovible de l'élément de fixation (2) dans le logement (5), et
b) comportant au moins un élément de blocage (6) qui peut être sollicité par l'élément de serrage (4) avec une force de serrage ou de désolidarisation (K),
c) ledit élément de blocage (6) étant disposé de telle sorte qu'il peut être déplacé par la force de serrage (K) en un mouvement (B) pour bloquer ou débloquer l'élément de fixation (2) dans le logement (5),
d) ledit élément de serrage (4) comportant au moins une chambre (7) déformable, qui peut être sollicitée par une surpression ou une dépression et qui est limitée au moins partiellement par au moins une paroi (8) résistante à la traction et/ou à la pression, de telle sorte que dans le cas d'une sollicitation de pression déformant la chambre (7), une force de déformation (S), générant la force de serrage (K), résulte sensiblement des forces de traction ou de pression orientées dans la direction longitudinale (L) de la paroi (8) et résultant de la déformation de la chambre (7),
e) ladite chambre étant réalisée de telle sorte que la section de la chambre, dans le cas d'un élargissement de la chambre (7) dans une première direction, subit une variation de longueur dans une deuxième direction perpendiculaire à celle-ci,
**caractérisé en ce que**
f) le logement (5) comporte un cône de centrage (11, 16) qui, dans le cas d'une sollicitation de l'élément de fixation (2) par une force de serrage, coopère avec celui-ci, ledit cône de centrage (11, 16), étant logé de manière flottante ou élastique pour une compensation de position selon une valeur de tolérance prédéfinissable perpendiculairement à l'axe longitudinal (14).

2. Dispositif de serrage selon la revendication 1, **caractérisé en ce que** la variation de longueur est une diminution de longueur.

3. Dispositif de serrage selon la revendication 1 ou 2, **caractérisé en ce que** la déformation de la chambre (7), générant une force de déformation (S), est dirigée sensiblement perpendiculairement à la force de déformation (S).

4. Dispositif de serrage selon l'une quelconque des revendications précédentes, **caractérisé en ce que** les parois formant la chambre sont réalisées pour générer une multiplication ou une réduction mécanique des forces de pression dynamiques fluides, exercées perpendiculairement sur les parois, en forces de traction ou de pression mécaniques orientées dans la direction longitudinale (L) des parois.

5. Dispositif de serrage selon l'une quelconque des revendications précédentes, **caractérisé en ce que** la chambre (7) est formée pour l'essentiel par deux parois (8) disposées face à face à étroite distance l'une de l'autre.

6. Dispositif de serrage selon l'une quelconque des revendications précédentes, **caractérisé en ce qu'**au moins une paroi (8), à l'état non sollicité par une surpression ou dépression, est réalisée avec une forme convexe ou concave par rapport à l'intérieur de la chambre (7).

7. Dispositif de serrage selon l'une quelconque des revendications précédentes, **caractérisé en ce que** l'élément de blocage (6) comporte une surface de calage (9), qui est orientée en oblique par rapport à la force de serrage (K) et qui, pendant le mouvement (B), coopère avec une surface (10) de l'élément de fixation (2) pour débloquer ou immobiliser l'élément de fixation (2).

8. Dispositif de serrage selon l'une quelconque des revendications précédentes, **caractérisé en ce que** l'élément de fixation (2) et/ou l'élément de serrage (4) sont réalisés sensiblement avec une symétrie de rotation.

9. Dispositif de serrage selon la revendication 8, **caractérisé en ce que** la force de serrage (K) est dirigée vers l'intérieur dans la direction radiale.

10. Dispositif de serrage selon l'une quelconque des revendications précédentes, **caractérisé en ce que** l'élément de blocage (6) est réalisé sous forme de bague de blocage fendue, entourant l'élément de fixation (2).

11. Dispositif de serrage selon l'une quelconque des revendications précédentes, **caractérisé en ce que** l'élément de blocage (6) est précontraint dans le sens opposé ou dans le sens de la force de serrage (K).

12. Dispositif de serrage selon l'une quelconque des revendications précédentes, **caractérisé en ce que** le cône de centrage (11), pour être supporté de manière flottante, est inséré dans un support (15) flexible, incorporé dans le logement (5).

13. Dispositif de serrage selon l'une quelconque des revendications précédentes, **caractérisé en ce que** le cône de centrage (11), pour être supporté de manière flottante, est réalisé sensiblement sous la forme d'une extrémité libre d'une saillie (16) en forme de manchon, dont l'extrémité opposée est formée ou fixée contre le logement (5) ou le corps de base (3).

14. Dispositif de serrage selon l'une quelconque des revendications précédentes, **caractérisé en ce que** le corps de base comporte en tant que moyen de centrage pour une pièce à insérer avec l'élément de fixation (2) dans le logement (5) au moins trois rainures longitudinales (19), orientées dans la direction radiale et réparties sur la périphérie autour de l'axe longitudinal (14).
